# EUROPEAN PATENT APPLICATION

(11) **EP 1 420 131 A2**
(43) Date of publication of application: **19.05.2004**
(21) Application number: 03005410.0
(22) Date of filing: 13.03.2003
(51) Int. Cl.: E05B 1/00, E05B 65/20

(54) **A door handle for vehicles**

(30) Priority: 16.11.2002 KR 2002071407
(71) Applicant: KIA MOTORS CORPORATION, Seoul 137-938 (KR)
(72) Inventor: Song, Jai Bong, Siheoung-si Kyunggi-do 429-869 (JP)
(74) Representative: Reinhard - Skuhra - Weise & Partner

(57) **Abstract**

The present invention relates to a door handle for vehicles which enables a driver and passengers in a car to unlock a door lock with gripping a grip (110) and pushing a press button (700) formed in a handle cover (100) in the vicinity of the grip with one hand only. Therefore, compared to conventional door handles whereby the driver or passenger should operate a locking lever to unlock a door operating equipment with one hand and grip the handle to apply force in the direction of opening the door with the other hand simultaneously, according to the present invention, doors of an automobile can be open by using one hand and thus, the utility of doors can be improved.

## Description

### FIELD OF THE INVENTION

The present invention relates to a door handle for vehicles and more particularly to a door handle for vehicles which enables a driver and passengers in a car to release a door lock with gripping a handle to get out of the car.

### BACKGROUND OF THE INVENTION

In general, doors for vehicles are divided into rotary vehicle doors and sliding vehicle doors.

The rotary doors are usually connected to a body of a car by hinges and opened or closed by the rotation thereof around the hinges. Most automobiles including passenger cars adopt such rotary doors.

On the other hand, the sliding vehicle doors are opened or closed by sliding movement thereof in parallel with a body of the vehicle.

In the inside of each door, a locking lever connected to a door operating equipment, i.e., a door lock equipment, is provided and also a door handle is provided so that a driver and passengers in the vehicle can apply force to the door handle in the direction of opening the door.

However, in the above-mentioned conventional doors, as the locking lever and the door handle were separately installed in the inside of the door, the passenger should operate the locking lever to unlock the door operating equipment with one hand and grip the handle to apply force in the direction of opening the door with the other hand in order to simultaneously unlock and open the door.

Alternatively, in order to open the door, the passenger should operate the locking lever to unlock the door operating equipment and then grip the handle to apply force in the direction of opening the door.

Therefore, it would be more convenient to open the door by unlocking the door operating equipment simultaneously with applying force to the handle with one hand.

### SUMMARY OF THE INVENTION

The object of the present invention is to provide a door handle for vehicles which enables a driver and passengers to open the door by unlocking a door operating equipment simultaneously with applying force to the handle with one hand.

Another object of the present invention is to provide a door handle for vehicles which is more convenient and has higher utility than the conventional door handle whereby the driver or passengers should operate a locking lever to unlock the door operating equipment with one hand and grip the handle to apply force in the direction of opening the door with the other hand.

In order to achieve the above objects, a door handle for vehicles according to the present invention comprises a handle cover having a slide hole in its upper part and a grip below the slide hole; a handle cover panel fixed in the rear of the handle cover; an arm provided in the upper part of the handle cover panel, with the upper end of the arm being rotated centering around a pivot; a cable which goes up and down according to the rotary state of the arm to switch on and off a door lock (not shown) ; a press button provided to reciprocate in the slide hole to rotate the arm and ascend/descend the cable; and a button guide to return the press button in the slide hole to its original non-pressed position by the elasticity of a restoring spring after the press button is pressed into the slide hole.

In order to open the door, a driver or a passenger grips the grip formed in the handle cover with one hand and push the press button in the slide hole with one finger of the hand. Then, as the press button is pressed into the inside of the slide hole, the arm rotates centering around the pivot, and the cable is lifted upward to unlock the door lock. Therefore, doors of an automobile can be open by using one hand and the utility of doors can be improved.

### BRIEF DESCRIPTION OF THE DRAWINGS

The accompanying drawing, which is included to provide a further understanding of the invention and is incorporated in and constitutes a part of this specification, illustrates an embodiment of the invention and together with the description serves to explain the principles of the invention, wherein:

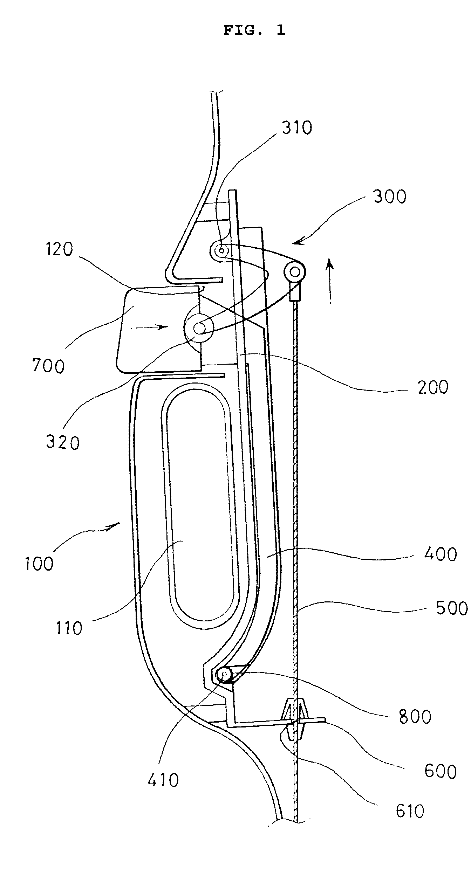

Fig. 1 is a sectional view showing the structure of a door handle for vehicles according to the present invention.

### DETAILED DESCRIPTION OF THE PREFERRED EMBODIMENTS

Reference will now be made in detail to preferred embodiments of the present invention in conjunction with the accompanying drawing.

As shown in FIG. 1, the door handle for vehicles according to the present invention comprises:
a handle cover (100) having a slide hole (120) in its upper part and a grip (110) below the slide hole;
a handle cover panel (200) fixed in the rear of the handle cover (100);
an arm (300) provided in the upper part of the handle cover panel (200) , with the upper end of the arm (300) being rotated centering around a pivot (310);
a cable (500) which goes up and down according to the rotary state of the arm (300) to switch on and off a door lock (not shown) ;
a press button (700) provided to reciprocate in the slide hole (120) to rotate the arm (300) and ascend/descend the cable (500) ; and
a button guide (400) to return the press button (700) in the slide hole (120) to its original non-pressed position by the elasticity of a restoring spring (800) after the press button (700) is pressed into the slide hole (120).

At the lower end of the arm (300), a roller (320) is provided to be in contact with the rear of the press button (700), and the middle part of the arm (300) is connected to the upper end of the cable (500), one end of which is connected to the door lock.

Further, a guide panel (600) is provided at the lower end of the handle cover panel (200) to guide the cable (500) and allow the cable (500) to smoothly ascend and descend through a guide hole (610) piercing therethrough.

After the press button (700) is pressed into the slide hole (120) to open the door, the button guide (400) returns the press button (700) to its original non-pressed position by the elasticity of the restoring spring (800). The button guide (400) is integrally formed with the press button (700).

When the press button (700) returns to its non-pressed position by the button guide (400), it is proj ected to the outside of the slide hole (120) to the extent that the front part of the button guide (400) abuts on the rear of the handle cover panel (200).

The button guide (400) is installed to be rotatable centering around a hinge (410) at its lower end behind the handle cover panel (200).

As described above, according to the present invention, the handle cover panel (200) is fixed on the rear of the handle cover (100) including the grip (110), and one end of the arm (300) is connected to the upper end part of the handle cover panel (200) to be rotatable around the pivot (310) . At the lower end of the handle cover panel (200) the guide panel (600) is extended and has the guide hole (610) through which the cable (500) ascends and descends.

Further, the press button (700) is installed in the slide hole (120) and after being pressed into the slide hole (120), it returns to its original position by the restoring spring (800) of the button guide (400), the lower end of which is rotated around the hinge (410).

Therefore, in opening the door of vehicles, a driver or a passenger can push the press button (700) in the slide hole (120) with one finger of one hand, with gripping the grip (110) formed in the handle cover (100) with the same hand. Then, as the press button (700) is pressed into the inside of the slide hole (120), the arm (300) rotates centering around the pivot (310), and the cable (500) is lifted upward to unlock the door lock through the guide hole (610) of the guide panel (600).

After the press button (700) is pushed into the slide hole (120), it returns to its original position by the elasticity of the recovering spring (800) fitted to the button guide (400), the lower end of which is rotated around the hinge (410).

As mentioned above, according to the present invention, the door handle comprising the grip and the press button in the vicinity of the grip enables a driver or a passenger to open doors of an automobile by gripping the grip and pushing the press button with one hand. Therefore, doors of an automobile can be open by using one hand and the utility of doors can be improved.

It will be apparent to those skilled in the art that various modifications and variations can be made to the present invention without departing from the spirit and scope of the invention. The present invention covers the modifications and variations thereof provided they come within the scope of the appended claims and their equivalents.

## Claims

1. A door handle for vehicles comprising:
a handle cover (100) having a slide hole (120) in its upper part and a grip (110) below the slide hole; a handle cover panel (200) fixed in the rear of the handle cover (100) ; an arm (300) provided in the upper part of the handle cover panel (200), with the upper end of the arm (300) being rotated centering around a pivot (310); a cable (500) which goes up and down according to the rotary state of the arm (300) to switch on and off a door lock; a press button (700) provided to reciprocate in the slide hole (120) to rotate the arm (300) and ascend/descend the cable (500) ; and a button guide (400) to return the press button (700) in the slide hole (120) to its original non-pressed position by the elasticity of a restoring spring (800) after the press button (700) is pressed into the slide hole (120).

2. The door handle as claimed in claim 1, wherein a roller (320) is provided at the lower end of the arm (300) to be in contact with the rear of the press button (700) , and the middle part of the arm (300) is connected to the upper end of the cable (500) , one end of which is connected to the door lock.

3. The door handle as claimed in claim 1, wherein a guide panel (600) is provided at the lower end of the handle cover panel (200) to guide the cable (500) and allow the cable (500) to smoothly ascend and descend through a guide hole (610) piercing therethrough.

4. The door handle as claimed in claim 1, wherein after the press button (700) is pressed into the slide hole (120) to open the door, the button guide (400) integrally formed with the press button (700) returns the press button (700) to its original non-pressed position by the elasticity of the restoring spring (800).

5. The door handle as claimed in claim 1, wherein when the press button (700) returns to its non-pressed position, it is projected to the outside of the slide hole (120) to the extent that the front part of the button guide (400) abuts on the rear of the handle cover panel (200).

6. The door handle as claimed in claim 1, wherein the button guide (400) is installed to be rotatable centering around a hinge (410) at its lower end behind the handle cover panel (200).
